# EUROPÄISCHE PATENTANMELDUNG

(11) **EP 1 508 747 A1**
(43) Veröffentlichungstag der Anmeldung: **23.02.2005**
(21) Anmeldenummer: 03018566.4
(22) Anmeldetag: 18.08.2003
(51) Int. Cl.: F23R 3/04, F02C 6/08

(54) **Diffusor für eine Gasturbine und Gasturbine zur Energieerzeugung**

(71) Anmelder: SIEMENS AKTIENGESELLSCHAFT, 80333 München (DE)
(72) Erfinder: Tiemann, Peter, 58452 Witten (DE)

(57) **Zusammenfassung**

Die Erfindung betrifft eine Gasturbine (1) zur Energieerzeugung, mit einem koaxial zu einem drehgelagerten Rotor (5) angeordneten Verdichter (7) zum Verdichten eines angesaugten gasförmigen Fluids, das zumindest teilweise in einer nachgeordneten Ringbrennkammer (9) zum Verbrennen eines Brennmittels unter Bildung eines heißen Arbeitsmediums (19) dient, mit einem zwischen dem Verdichter und der Ringbrennkammer (9) koaxial zum Rotor (5) angeordneten ringförmigen Diffusor (15) zur Aufteilung und Umlenkung des Fluids (F), wobei ein Teil des Fluids mittels eines in der Fluidströmung angeordneten Aufteilungselements (35) als Kühlfluid für die der Ringbrennkammer (9) nachgeschalteten Turbinenstufen ausgekoppelt wird. Um einen kompakten Diffusor (15) und eine wirtschaftliche Gasturbine (1) anzugeben, die eine strömungstechnisch verbesserte Entnahme von zur Kühlung eingesetzter Luft ermöglicht, wird vorgeschlagen, dass das koaxial zum Rotor (5) angeordnete ringförmige Aufteilungselement (35) zumindest eine der Fluidströmung zugewandte Öffnung aufweist und dass das Aufteilungselement (35) von mehreren hohlen rippenförmigen Stützelementen (53, 55) am Diffusor (15) abgestützt ist, durch die das mittels der Öffnung ausgekoppelte Kühlfluid zunächst in Richtung des Rotors (5) geführt wird.

## Beschreibung

Die Erfindung betrifft eine Gasturbine gemäß dem Oberbegriff des Anspruchs 1 und einen Diffusor gemäß dem Oberbegriff des Anspruchs 12.

Aus der DE 196 39 623 ist eine Gasturbine zur Energieerzeugung mit einem Verdichter und einer Ringbrennkammer bekannt. Zwischen dem Verdichter und der Ringbrennkammer ist ein Diffusor angeordnet, der die vom Verdichter am ringförmigen Verdichteraustritt bereitgestellte verdichtete Luft in Richtung des an der Stirnseite der Ringbrennkammer angeordneten Brenners umlenkt. Dazu weist der Diffusor Konturen zur Strömungsführung als auch ein im Querschnitt C-förmiges Umlenkblech auf, welches von einer den Diffusor kreuzenden Halterung befestigt ist. Ferner sind im Diffusor zur Kühlluftentnahme koaxial zum Rotor mehrere über den Umfang verteilte feststehende Entnahmerohre angeordnet, die am Verdichteraustritt Kühlluft entnehmen und zu den Turbinenstufen der Gasturbine führen.

Die Halterung des C-förmigen Umlenkbleches stellt eine behindernde Verblockung des vom Diffusor gebildeten Strömungskanals dar. Ebenso stört die Anordnung der Entnahmerohre die im Diffusor strömende und zu den Brennern geführte Luft. Dabei können sich Strömungsverluste ergeben. Ferner müssen die Rohre, die über den Umfang verteilt sind, zur ausreichenden Bereitstellung von Kühlluft für die Turbinenstufen einen Mindestdurchmesser aufweisen, so dass nicht nur die aus der Mitte des Verdichteraustritts herausströmende verdichtete Luft entnommen wird, sondern auch die am Rand des Verdichteraustritts.

Aufgabe der vorliegenden Erfindung ist es daher einen kompakten Diffusor und eine Gasturbine mit einem solchen Diffusor anzugeben, die eine strömungstechnisch verbesserte Entnahme von Kühlluft ermöglicht.

Die Aufgabe wird bezogen auf die Gasturbine durch die Merkmale des Anspruchs 1 gelöst. Vorteilhafte Ausgestaltungen sind in den Unteransprüchen gegeben.

Die Lösung sieht bezogen auf die Gasturbine vor, dass das koaxial zum Rotor angeordnete ringförmige Aufteilungselement zumindest eine der Fluidströmung zugewandte Öffnung aufweist und dass das Aufteilungselement von mehreren hohlen rippenförmigen Stützelementen am Diffusor abgestützt ist, durch die das mittels der Öffnung ausgekoppelte Kühlfluid zunächst in Richtung des Rotors geführt wird. Die Aufteilung des verdichteten Fluids erfolgt in einem platzsparenden Diffusor, der eine strömungsgünstige, verwirbelungs- und verlustarme Entnahme des Kühlfluids für,Turbinenstufen erlaubt. Gleichzeitig kann eine günstige Weiterführung des verbleibenden Fluids in Richtung ihrer nachfolgenden Verwendungsgebiete, der Ringbrennkammerwandungen, erfolgen. Die aufgeteilten Fluidströme kreuzen sich dabei ohne wesentliche Behinderungen und ohne Erzeugung von Strömungsverlusten, da die Stützelemente stromlienenförmig profiliert sind.

Üblicherweise wird nach Möglichkeit ein besonders sauberes und kühles Kühlfluid eingesetzt. Im Kühlfluid befindliche Partikel und Schwebeteilchen können sich bei prallgekühlten Bauteilen, die einem Heißgas ausgesetzt sind, an den Prallkühlöffnungen absetzten und diese schlimmstenfalls verschließen.

Aufgrund des am Verdichteraustritt und im ringförmigen Strömungskanal herrschenden Dralls im Fluid streben Schwebeteilchen und Partikel, die nicht mechanisch herausgefiltert werden konnten, zum radial inneren und äußeren Rand des Strömungskanals. Gleichfalls herrschen am radial inneren und äußeren Rand des Strömungskanals höhere Temperaturen und ein geringerer Druck im Fluid als in der dazwischenliegenden Mitte. Das Aufteilungselement ist folglich genau an der Position im Diffusor angeordnet, an dem das für die Kühlung der Turbinenstufen am meisten geeignete Fluid strömt. Durch die Anordnung der Öffnungen strömt selbsttätig das zur Kühlung am meisten geeignete Fluid in das Aufteilungselement hinein und wird somit von dem restlichen Fluid getrennt. Das restliche und später zur Verbrennung genutzte Fluid ist wärmer als das ausgekoppelte Kühlfluid und weist einen geringeren Druck auf.

Wenn die Öffnung als eine koaxiale Ringspaltöffnung ausgebildet ist, kann über den gesamten Umfang des ringförmigen Aufteilungselementes die Auskoppelung des Fluids als Kühlfluid erfolgen. Der Ringspalt kann dementsprechend schmaler ausgebildet sein als der Durchmesser der Entnahmerohre aus dem Stand der Technik. So wird nur das kühlste, sauberste und das mit dem höchsten Druck versehene Fluid hinter dem Verdichteraustritt als Kühlfluid ausgekoppelt.

Das Aufteilungselement wird durch im Ringspalt vorgesehene und in Axialrichtung verlaufende Rippen, die über den Umfang des Ringspaltes verteilt sind, verstärkt und versteift. Gleichzeitig dienen diese Rippen als Führungselemente im Aufteilungselement für das bereits ausgekoppelte Kühlfluid, so dass es in Richtung der Stützelemente geführt wird. Daher ist es vorteilhaft, wenn die Ringspaltöffnung entlang des Umfangs segmentiert ist.

Der Strömungskanal im Diffusor wird von einer radial innen liegenden Flanke und einer radial außen liegenden Flanke begrenzt. Dabei divergieren die Flanken bereits in dem dem Aufteilungselement vorgeschalteten Strömungskanal des Diffusors. Damit wird eine Druckerhöhung im Fluid erzielt, welche sich positiv auf den Druck des ausgekoppelten Kühlfluids auswirkt.

Wenn das ringförmige Aufteilungselement mittels zweier Wände keilförmig ausgebildet und mittig zwischen den beiden divergierenden Flanken angeordnet ist, so dass es jeweils mit einer Wand und der ihr gegenüberliegenden Flanke einen ringförmigen Teilkanal für das Fluid bildet, kann das für die Verbrennung eines Brennmittels vorgesehene Fluid in zwei ungefähr gleich große Teilströme aufgeteilt werden. Der radial innen liegende Teilstrom des Fluids kann dann noch bevor es zur Verbrennung genutzt wird, zur Kühlung der radial innen liegenden Ringbrennkammerwand genutzt werden und der radial nach außen geführte Teilstrom des Fluids zur Kühlung der radial außen liegenden Ringkammerbrennwand.

Einen besonders verlustarmen Strömungsverlauf für die beiden Teilströme kann erzielt werden, wenn die beiden Teilkanäle über ihre Strömungslänge im Wesentlichen einen konstanten Strömungsquerschnitt aufweisen.

Für die sichere Befestigung des Aufteilungselementes und zum verlustarmen Kreuzen des ausgekoppelten Kühlfluids durch den radial innen liegenden Teilstrom werden die hohlen Stützelemente, die das Kühlfluid im Inneren führen, an der radial innen liegenden Flanke abgestützt. Somit kann verlustarm das durch das Aufteilungselement in der Mitte der Fluidströmung entnommene bzw. ausgekoppelte Kühlfluid in Richtung des Rotors umgeleitet werden.

Das durch das Stützelement durchgeführte Kühlfluid kann strömungstechnisch gesehen günstig den Turbinenstufen zur Verfügung gestellt werden, wenn der Hohlraum des Stützelementes mit einem radial weiter innen liegenden Ringkanal kommuniziert.

Zweckmäßigerweise ist das Fluid Verdichterluft.

Eine besonders kühle Kühlluft kann den Turbinenstufen zur Verfügung gestellt werden, wenn die nicht zur Führung des Kühlfluids dienenden oberen Stützelemente hohl ausgebildet sind und durch sie ein Rohr mit einer Düse einbringbar ist, durch die eine Flüssigkeit in Strömungsrichtung gesehen hinter der Öffnung zur Erzeugung von Verdunstungskälte eindüsbar ist. Daher wird weniger Kühlluft benötigt, wodurch die Öffnung an sich schmaler ausgeführt und Kühlluft eingespart werden kann. Gleichfalls kann der Diffusor und das Aufteilungselement kompakter ausgeführt werden.

Kostengünstig ist die Verwendung von Wasser als Flüssigkeit.

Die Aufgabe wird bezogen auf den Diffusor durch die Merkmale des Anspruchs 12 gelöst. Die Vorteile entsprechen dabei denen der vorherigen Ausführungen.

Die Erfindung wird anhand einer Zeichnung erläutert. Dabei zeigen:
- Fig. 1: einen zwischen dem Verdichteraustritt und der Ringbrennkammer angeordneten Diffusor mit einem Aufteilungselement,
- Fig. 2: den Ausschnitt eines segmentierten Aufteilungselements und
- Fig. 3: eine Gasturbine in einem Längsteilschnitt.

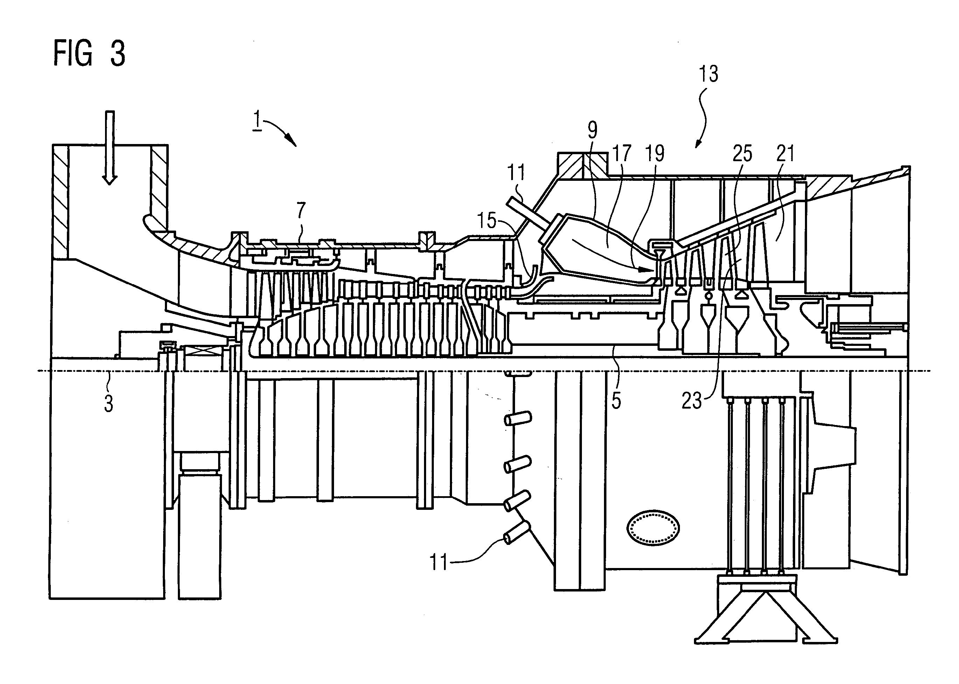

Fig. 3 zeigt eine Gasturbine 1 mit einem um eine Drehachse 3 drehgelagerten Rotor 5. Entlang des Rotors 5 weist die Gasturbine 1 einen Verdichter 7, eine Ringbrennkammer 9 und eine Turbine 13 auf, die aus vier aufeinanderfolgenden Turbinenstufen gebildet ist. An der Ringbrennkammer 9 sind über ihren Umfang verteilt mehrere Brenner 11 vorgesehen.

Der Verdichter 7 saugt Umgebungsluft an, verdichtet sie und übergibt sie an einen nachgeschalteten Diffusor 15, der an dem ringbrennkammerseitigen Ende des Verdichters 7 befestigt ist. Im Diffusor 15 wird die verdichtete Luft aufgeteilt. Der überwiegende Teil der Luft wird zum Kühlen entlang der Ringbrennkammer 9 geführt, anschließend mit einem Brennmittel vermischt und dann mittels der Brenner 11 in dem ringförmigen Verbrennungsraum 17 unter Bildung eines heißen Arbeitsmediums 19 verbrannt. Das Arbeitsmedium 19 strömt in der Turbine 13 im Heißgaskanal 21 an Leitschaufeln 23 und Laufschaufeln 25 vorbei. Dabei entspannt sich das Arbeitsmedium 19 an den am Rotor 5 befestigten Laufschaufeln 25 und treibt diesen an. Die am Rotor 5 abgreifbare Rotationsenergie wird zum Antrieb eines elektrischen Generators oder einer Kraftmaschine genutzt.

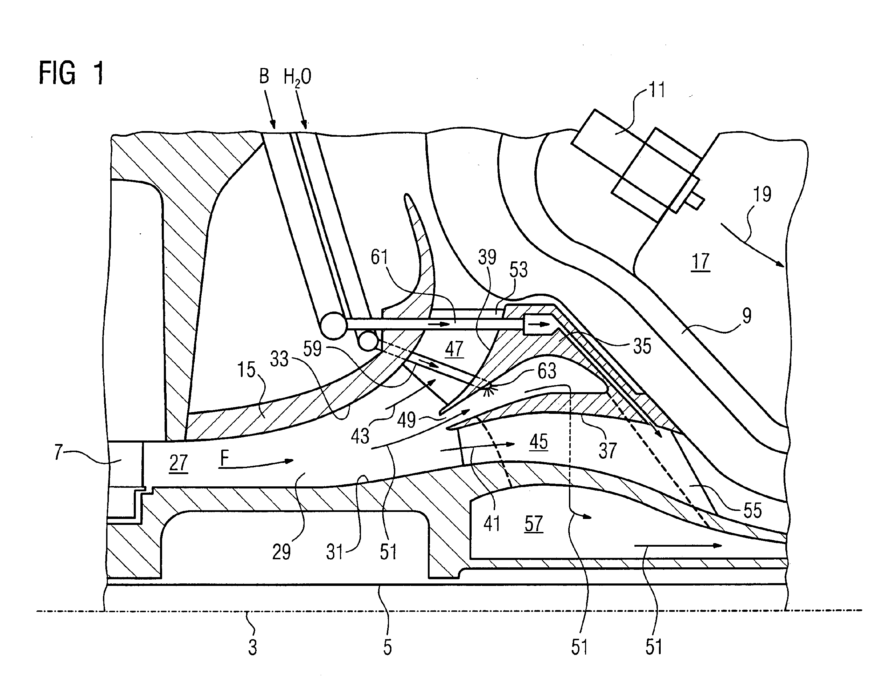

Fig. 1 zeigt den zwischen Verdichter 7 und Ringbrennkammer 9 angeordneten ringförmigen Diffusor 15 im Detail. Von einem Verdichteraustritt 27 erstreckt sich'der Diffusor 15 zunächst in Axialrichtung zur Ringbrennkammer 9 hin. Ein Strömungskanal 29 wird dabei einmal von einer radial innen liegenden Flanke 31 und von einer radial außen liegenden Flanke 33 begrenzt. In Strömungsrichtung des Fluids F divergieren die beiden Flanken 31, 33.

Im weiteren Verlauf des Strömungskanals 29 ist im Diffusor 15 ein ringförmiges und im Querschnitt keilförmiges Aufteilungselement 35 koaxial zum Rotor 5 angeordnet.

Das Aufteilungselement 35 weist eine der radial innen liegenden Flanke 31 gegenüberliegende Wand 37 und eine der radial außen liegenden Flanke 33 gegenüberliegende Wand 39 auf. Die Wand 37 bildet mit der radial innen liegenden Flanke 31 einen Teilkanal 45 für einen Teilstrom 41. Ein weiterer Teilkanal 47 für einen weiteren Teilstrom 43 wird von der Wand 39 und der radial außen liegenden Flanke 33 begrenzt.

Das ringförmige Aufteilungselement 35 weist eine der Strömung des Fluids F zugewandte Ringspaltöffnung 49 auf.

Zwischen der radial außen liegenden Flanke 33 und der Wand 39 erstrecken sich obere Stützelemente 53, die rippenartig und strömlinienförmig ausgestaltet sind. Ebenso geformte untere Stützelemente 55 erstrecken sich zwischen der Wand 37 und der radial innen liegenden Flanke 31. Mittels der Stützelemente 53, 55 wird im ringförmigen Diffusor 15 das ringförmige Aufteilungselement 35 positioniert und gehalten. Die Stützelemente 53, 55 sind dabei jeweils hohl ausgeführt. Die unteren Stützelemente 55 stehen mit der Ringspaltöffnung 49 einerseits und mit einem die Drehachse 3 koaxial umgebenden Ringkanal 57 andererseits in Strömungsverbindung.

Von außen ist durch das obere Stützelement 53 ein Wasserrohr 59 radial einsteckbar, welches im Aufteilungselement 35 in Strömungsrichtung gesehen hinter der Ringspaltöffnung 49 endet. An dem dem Aufteilungselement 35,zugewandten Ende des Wasserrohres 59 ist zur Eindüsung eine Düse 63 befestigt. Am abgewandten Ende steht das Wasserrohr 59 mit einer Wasserquelle in Verbindung.

Ein weiteres durch das obere Stützelement 53 hindurchgeführtes Brennmittelrohr 61 erstreckt sich in das Aufteilungselement 35 hinein und kommuniziert dort mit einem Kanal, der in den ersten Teilkanal 45 mündet. Dem Brennmittelrohr 61 ist dabei ein Brennmittel B zuführbar.

Während des Betriebes der Gasturbine 1 strömt vom Verdichter 7 verdichtete Luft als Fluid F durch den Verdichteraustritt 27 hinein in den Diffusor 15. Das keilförmige Aufteilungselement 35 teilt das Fluid F in zwei ungefähr gleichgroße Teilströme 41, 43 und in einen mittleren Teilstrom 51 auf. Der Teilstrom 51 strömt in den Ringspaltkanal 49 hinein und wird so der Fluidströmung entnommen bzw. ausgekoppelt.

Der erste Teilstrom 41 wird zur radial innen liegenden Ringbrennkammerwand geführt. Von dort aus strömt der Teilstrom 41 die Ringbrennkammerwand kühlend an dieser entlang und wird anschließend im Brenner 11 mit einem Brennmittel vermischt. Das Gemisch wird dann in der Ringbrennkammer 9 zum heißen Arbeitsmedium 19 verbrannt.

Der im weiteren Teilkanal 47 strömende Teilstrom 43 wird nach dem Austreten aus dem Diffusor 15 zur radial äußeren Ringbrennkammerwand geführt und von dort aus weiter in den Brenner 11, wo er ebenfalls mit einem Brennmittel vermischt und anschließend im Verbrennungsraum 17 zum heißen Arbeitsmedium 19 verbrannt wird.

Der mittlere Teilstrom 51 strömt in das Aufteilungselement 35 hinein und wird in Richtung der unteren Stützelemente 55 umgelenkt. Von dort aus strömt es durch die hohlen Stützelemente 55 in Richtung des Rotors 5 und mündet in einen Ringkanal 57. Dann wird dieser Teilstrom 51 als Kühlfluid parallel zur Drehachse 3 zu den Turbinenstufen geführt und dort zur Kühlung der Leitschaufeln 23 und Laufschaufeln 25 eingesetzt.

Der mittlere Teilstrom 51 weist für die Verwendung als Kühlfluid die günstigsten Eigenschaften auf. Im Strömungskanal 29 ist die Verdichterluft besonders in der Nähe der radial innen und außen liegenden Flanken 31, 33 stärker mit Partikeln verschmutzt, jedoch ist die dazwischenliegende mittlere Strömung weitestgehend partikelfrei. Zusätzlich ist ebenfalls im gleichen Bereich die niedrigste Temperatur bei höchstem Druck vorhanden. Deshalb wird dieser Teil der Strömung zur Kühlung eingesetzt.

Die Temperatur des mittleren Teilstroms 51 wird zusätzlich verringert, indem durch das Wasserrohr 59 hinter der Ringspaltöffnung 49 Wasser H₂O eingedüst wird. Die Düse 62 zerstäubt das Wasser H₂O zu kleinen Wasserperlen, so dass es leichter verdunsten kann, wodurch es dem Teilstrom 51 Wärme entzieht. Dadurch wird die benötigte Menge an Kühlfluid weiter reduziert und die sich in Radialrichtung erstreckende Öffnung, insbesondere die Ringspaltöffnung 49, kann dadurch noch schmaler ausgeführt werden.

Das mit dem Teilstrom 41 sich vermischende Brennmittel wird durch das Brennmittelrohr 61 eingedüst. Während der Kühlung der radial inneren Ringbrennkammerwand wird das Gemisch erwärmt, was sich bei der Verbrennung positiv auf den NOx-Gehalt im Arbeitsmedium 19 auswirkt, d.h. der NOx-Gehalt wird reduziert. Die Zuführung des Brennmittels erfolgt in Strömungsrichtung gesehen weit hinter der Aufteilung des Fluids F im hinteren Bereich des Teilkanals 45. Dadurch wird eine Rückströmung des Brennmittels B und somit eine Vermischung mit dem Teilsrom 51 vermieden.

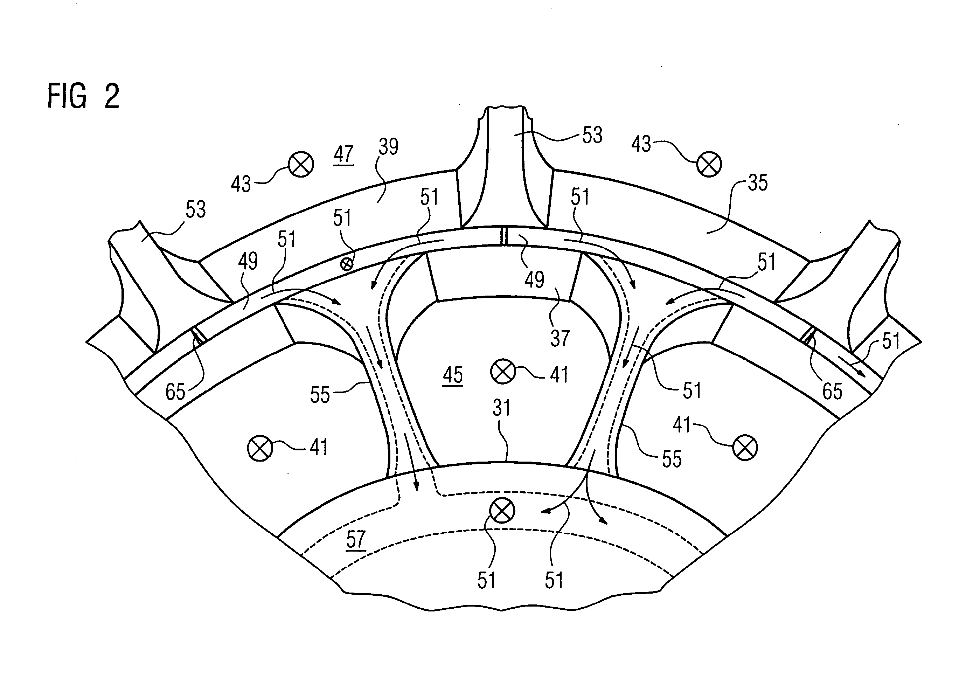

Fig. 2 zeigt das Aufteilungselement 35 in Strömungsrichtung gesehen. Das Aufteilungselement 35 ist mittels der unteren Stützelemente 55 an der radial innenliegenden Flanke 31 abgestützt und mittels der oberen Stützelemente 53 an der hier nicht dargestellten radial außenliegenden Flanke 33. Die Wände 37, 39 bilden jeweils mit den ihnen gegenüberliegenden Flanken 31, 33 einen Teilkanal 45, 47.

Das Aufteilungselement 35 weist an seiner dem Verdichter 7 zugewandten Seite eine Ringspaltöffnung 49 auf, die mittels radial erstreckender Rippen 65 segmentiert ist.

Das Fluid (F) strömt vom Verdichter 7 aus im Diffusor 15 in Richtung des Aufteilungselements 35 und teilt sich in drei Teilströme 41, 43, 51 auf.

Der mittlere Teilstrom 51 strömt in die Ringspaltöffnung 49 hinein und wird durch die innere Kontur des hohlen Aufteilungselementes 35 in Richtung des Rotors 5 umgelenkt.

Anschließend durchströmt es die hohlen unteren Stützrippen 55 und wird dann in den Ringkanal 57 eingespeist. Von dort aus wird der Teilstrom 51 in Axialrichtung zu den Turbinenstufen geführt und dort zum Kühlen der heißgasbeaufschlagten Leitund Laufschaufeln eingesetzt.

## Patentansprüche

1. Gasturbine (1) zur Energieerzeugung,
mit einem koaxial zu einem drehgelagerten Rotor (5) angeordneten Axialverdichter zum Verdichten eines angesaugten gasförmigen Fluids (F), das zumindest teilweise in einer nachgeordneten Brennkammer zum Verbrennen eines Brennmittels unter Bildung eines heißen Arbeitsmediums (19) dient,
mit einem zwischen dem Axialverdichter und der Brennkammer koaxial zum Rotor (5) angeordneten ringförmigen Diffusor (15) zur Aufteilung und Umlenkung des Fluids (F),
wobei ein Teil des Fluids (F) mittels eines in der Fluidströmung angeordneten Aufteilungselements (35) als Kühlfluid für die der Brennkammer nachgeschalteten Turbinenstufen ausgekoppelt wird,
**dadurch gekennzeichnet,**
**dass** das koaxial zum Rotor (5) angeordnete ringförmige Aufteilungselement (35) zumindest eine der Fluidströmung zugewandte Öffnung aufweist und
**dass** das Aufteilungselement (35) von mehreren hohlen rippenförmigen Stützelementen (53, 55) am Diffusor (15) abgestützt ist, durch die das mittels der Öffnung ausgekoppelte Kühlfluid zunächst in Richtung des Rotors (5) geführt wird.

2. Gasturbine (1) nach Anspruch 1,
**dadurch gekennzeichnet,**
**dass** die Öffnung als eine koaxiale Ringspaltöffnung (49) ausgebildet ist.

3. Gasturbine (1) nach Anspruch 2,
**dadurch gekennzeichnet**
**dass** die Ringspaltöffnung (49) entlang des Umfangs segmentiert ist.

4. Gasturbine (1) nach einem der Ansprüche 1 bis 3,
**dadurch gekennzeichnet,**
**dass** der dem Aufteilungselement (35) im Diffusor (15) vorgeschaltete Strömungskanal (29) von einer radial innen liegenden Flanke (31) und einer radial außen liegenden Flanke (33) begrenzt wird, die in Strömungsrichtung des Fluids (F) gesehen divergieren.

5. Gasturbine (1) nach Anspruch 4,
**dadurch gekennzeichnet,**
**dass** das ringförmige Aufteilungselement (35) mittels zweier schenkelartiger Wände (37, 39) keilförmig ausgebildet und
mittig zwischen den beiden divergierenden Flanken (31, 33) angeordnet ist, so dass es jeweils mit einer Wand und der ihr gegenüberliegenden Flanke einen ringförmigen Teilkanal (45, 47) für das Fluid bildet.

6. Gasturbine (1) nach Anspruch 5,
**dadurch gekennzeichnet,**
**dass** die beiden Teilkanäle (45, 47) über ihre Strömungslänge im wesentlichen einen konstant Querschnitt aufweisen.

7. Gasturbine (1) nach einem der Ansprüche 1 bis 6,
**dadurch gekennzeichnet,**
**dass** die das Kühlfluid im Inneren führenden Stützelemente (53, 55) an der radial innen liegenden Flanke (31) abgestützt sind.

8. Gasturbine (1) nach einem der Ansprüche 1 bis 7,
**dadurch gekennzeichnet,**
**dass** der Hohlraum des Stützelementes (53, 55) mit einem radial weiter innenliegenden Ringkanal (57) kommuniziert.

9. Gasturbine (1) nach einem der Ansprüche 1 bis 8,
**dadurch gekennzeichnet,**
**dass** das Fluid Verdichterluft ist.

10. Gasturbine (1) nach einem der Ansprüche 1 bis 9,
**dadurch gekennzeichnet,**
**dass** nicht zur Kühlfluidführung dienenden oberen Stützelemente (53) hohl ausgebildet sind, und
**dass** durch sie ein Rohr (59, 61) mit einer Düse einbringbar ist, durch das eine Flüssigkeit in Strömungsrichtung gesehen hinter die Öffnung zur Erzeugung von Verdunstungskälte eindüsbar ist.

11. Gasturbine (1) nach Anspruch 10,
**dadurch gekennzeichnet,**
**dass** die Flüssigkeit Wasser (H₂O) ist.

12. Diffusor (15) für eine Gasturbine (1) zur Energieerzeugung,
wobei die Gasturbine (1) einen koaxial zu einem drehgelagerten Rotor (5) angeordneten Axialverdichter zum Verdichten eines angesaugten gasförmigen Fluids (F) aufweist, das zumindest teilweise in einer nachgeordneten Brennkammer zum Verbrennen eines Brennmittels unter Bildung eines heißen Arbeitsmediums (19) dient, und
wobei der ringförmigen Diffusor (15) zur Aufteilung und Umlenkung des Fluids (F) koaxial zum Rotor (5) angeordnet ist,
wobei ein Teil des Fluids (F) mittels eines in der Fluidströmung angeordneten Aufteilungselements (35) als Kühlfluid für die der Brennkammer nachgeschalteten Turbinenstufen ausgekoppelt wird,
**dadurch gekennzeichnet,**
**dass** das koaxial zum Rotor (5) angeordnete ringförmige Aufteilungselement (35) zumindest eine der Fluidströmung zugewandte Öffnung aufweist und
**dass** das Aufteilungselement (35) von mehreren hohlen rippenförmigen Stützelementen (53, 55) am Diffusor (15) abgestützt ist, durch die das mittels der Öffnung ausgekoppelte Kühlfluid zunächst in Richtung des Rotors (5) geführt wird.
